# FASCICULE DE BREVET EUROPEEN

(11) **EP 3 380 570 B1**
(45) Date de publication et mention de la délivrance du brevet: **03.03.2021**
(21) Numéro de dépôt: 16815597.6
(22) Date de dépôt: 24.11.2016
(51) Int. Cl.: C09D 5/24, C09D 127/16, C09D 163/10, H01M 8/0228, C08K 3/04

(54) **REVÊTEMENT ADHÉSIF AU MÉTAL, HYDROPHOBE ET ÉLECTRIQUEMENT CONDUCTEUR, UTILISABLE NOTAMMENT COMME PEINTURE POUR PLAQUE BIPOLAIRE DE PILE À COMBUSTIBLE**
HYDROPHOBER UND ELEKTRISCH LEITENDER ÜBERZUG MIT ADHESION AUF METAL ZUR VERWENDUNG INSBESONDERE ALS BESCHICHTUNG FÜR BIPOLARPLATTEN IN BRENNSTOFFZELLEN
HYDROPHOBIC AND ELECTRICALLY CONDUCTIVE COATING WITH ADHESION TO METAL USEFUL IN PARTICULAR AS PAINT FOR BIPOLAR PLATES OF FUEL CELLS

(30) Priorité: 26.11.2015 FR 1561416
(43) Date de publication de la demande: 03.10.2018
(73) Titulaire: Compagnie Générale des Etablissements Michelin, 63000 Clermont-Ferrand (FR)
(72) Inventeur: FEDURCO, Milan, 63040 Clermont-Ferrand Cedex 9 (FR); DELFINO, Antonio, 63040 Clermont-Ferrand Cedex 9 (FR); OLSOMMER, David, 63040 Clermont-Ferrand Cedex 9 (FR)
(74) Mandataire: Desbordes, Guillaume
(86) Numéro de dépôt international: PCT/FR2016/053083
(87) Numéro de publication internationale: WO 2017/089715

(56) Documents cités:
- US-A1- 2004 211 943
- US-A1- 2006 046 125
- US-A1- 2008 299 419

## Description

### 1. DOMAINE DE L'INVENTION

Le domaine de la présente invention est celui des compositions solides utilisables notamment comme revêtement adhésif au métal, hydrophobe et électriquement conducteur.

Elle se rapporte plus particulièrement à l'utilisation de telles compositions, parfois qualifiées aussi de « peintures », sur des substrats au moins en partie métalliques, en particulier sur des plaques bipolaires en acier pour piles à combustible à membrane polymère échangeuse d'ions, dites « PEM » (pour *Proton Exchange Membrane).*

### 2. ETAT DE LA TECHNIQUE

On rappellera tout d'abord qu'une pile à combustible PEM est constituée d'un empilage de cellules électrochimiques élémentaires connectées électriquement en série et qui, chacune, développe une certaine tension, en général comprise entre 0,3 et 1,1 Volt. La tension totale développée par la pile vaut donc la somme des tensions élémentaires, par exemple de l'ordre de quelques centaines de Volts pour des piles à combustible visant des applications au domaine des transports.

Chaque cellule électrochimique élémentaire est habituellement constituée de la superposition de cinq couches : une feuille en matériau polymère dont une zone forme une membrane échangeuse d'ions, deux électrodes comportant des éléments chimiques nécessaires au déroulement de la réaction électrochimique, comme par exemple du platine, et deux couches de diffusion des gaz (GDL pour *Gaz Diffusion Layer*) permettant d'assurer une diffusion homogène des gaz utilisés sur la totalité de la surface de la membrane échangeuse d'ions. L'alimentation des gaz est assurée par des plaques que l'on appelle en général « plaques bipolaires » car elles sont en contact avec l'anode d'une cellule et avec la cathode de la cellule adjacente.

Ces plaques bipolaires remplissent deux fonctions très différentes. On sait qu'il faut alimenter la pile en gaz carburant et en gaz comburant, c'est-à-dire en hydrogène et en air ou en oxygène pur, et qu'il faut également la refroidir, c'est-à-dire la faire traverser par un fluide de refroidissement comme de l'eau. L'une des fonctions des plaques bipolaires est de permettre l'acheminement de ces différents fluides nécessaires au fonctionnement de la pile à combustible. Par ailleurs, les plaques bipolaires remplissent également une fonction électrique : assurer la conduction électrique entre l'anode et la cathode de chacune des cellules électrochimiques adjacentes.

Ces différentes fonctions, acheminer les fluides et conduire l'électricité, donnent le cahier des charges auquel doivent satisfaire les matériaux utilisés pour la réalisation de ces plaques bipolaires. Les matériaux utilisés doivent présenter une très grande conductibilité électrique, ils doivent aussi être étanches aux fluides utilisés et faire preuve d'une très grande stabilité chimique vis-à-vis de ces fluides.

En outre, les plaques bipolaires doivent présenter les caractéristiques mécaniques suffisantes pour permettre la superposition d'un grand nombre de cellules électrochimiques élémentaires et plaques bipolaires associées et le maintien de l'ensemble par compression entre des plaques d'extrémité grâce à des tirants. Elles doivent donc présenter des caractéristiques mécaniques suffisantes pour supporter cette compression.

Le graphite est couramment utilisé car ce matériau offre tout à la fois une grande conductibilité électrique et est chimiquement inerte aux fluides utilisés. A titre d'exemple, la demande de brevet WO 2005/006472 montre une réalisation possible de telles plaques bipolaires. On voit qu'elles sont constituées par la superposition de deux plaques en graphite relativement rigides avec interposition d'une feuille réalisée en matière graphite assez souple afin de s'accommoder des tolérances d'épaisseur des différentes couches. Les plaques en graphites comportent les réseaux de canaux nécessaires à la distribution des gaz carburant et en gaz comburant, et le réseau de canaux permettant de faire traverser chaque plaque bipolaire par un fluide de refroidissement comme de l'eau. Malheureusement, les éléments rigides participant à la constitution des plaques bipolaires en graphite sont assez fragiles aux chocs, en particulier pendant les manipulations lors de l'assemblage de la pile. La couche réalisée en matériau graphite souple, dont il a été fait état précédemment, est en outre tout particulièrement difficile à manipuler de façon industrielle. Tout ceci pénalise de façon importante les coûts de fabrication de telles plaques bipolaires.

Des plaques bipolaires en acier, notamment en acier inox ou recouvertes d'acier inox sont également connues pour ce type d'applications. Si elles sont certes beaucoup plus robustes mécaniquement que des plaques en graphite, elles doivent être toutefois recouvertes de revêtements de protection protégeant le métal contre la corrosion, capables d'adhérer au métal tout en offrant une conductivité électrique suffisante, ce qui rend la formulation de tels revêtements particulièrement complexe à mettre au point.

De telles plaques bipolaires et/ou leurs revêtements de protection ont par exemple été décrits dans les documents brevet US 6 372 376, US 6 379 476, US 6 537 359, US 7 365 121, US 7 910 262, WO 02/13300, US 2004/0211943, US 2006/0046125 et US 2008/0299419.

L'objet de la présente invention est de proposer une composition solide nouvelle qui, notamment à titre de revêtement de protection pour plaque bipolaire, répond aux exigences décrites ci-dessus, offrant avantageusement à ce revêtement non seulement souplesse et flexibilité, mais aussi des propriétés auto-obturantes particulièrement avantageuses qui lui confèrent in fine une endurance améliorée.

### 3. BREVE DESCRIPTION DE L'INVENTION

Ainsi, selon un premier objet, la présente invention concerne une composition solide utilisable notamment comme revêtement adhésif au métal, hydrophobe et électriquement conducteur, comportant au moins (% en poids de composition) :
- à titre de charge conductrice, de 75% à 95% de microparticules électriquement conductrices dont la taille moyenne en poids est comprise entre 1 µm et 100 µm ;
- à titre de matrice polymérique adhésive au métal et hydrophobe, de 5% à 25% d'une matrice polymère notée « P » comportant au moins 2 polymères différents :
   a) P1: un polymère fluoré thermoplastique dont la masse moléculaire moyenne en poids notée « Mw » est comprise entre 100 000 et 1 000 000 g/mol ;
   b) P2 : une résine thermodurcie dont la température de transition vitreuse est comprise entre 30°C et 150°C.

L'invention concerne également l'utilisation d'une telle composition comme revêtement adhésif au métal, hydrophobe et électriquement conducteur, sur un substrat dont au moins la surface est au moins en partie métallique, ledit substrat étant en particulier une plaque bipolaire en acier pour pile à combustible.

L'invention concerne également tout substrat dont au moins la surface est au moins en partie métallique, au moins ladite partie métallique étant revêtue d'une composition solide selon l'invention. L'invention concerne en particulier une plaque bipolaire en acier, pour pile à combustible, revêtue d'une composition solide selon l'invention.

L'invention ainsi que ses avantages seront aisément compris à la lumière de la description détaillée et des exemples de réalisation qui suivent.

### 4. DESCRIPTION DETAILLEE DE L'INVENTION

Dans la présente demande, sauf indication expresse différente, tous les pourcentages (%) indiqués sont des pourcentages en masse (ou en poids, de manière équivalente).

L'expression « x et/ou y » signifie « x » ou « y » ou les deux (c'est-à-dire « x et y »). Tout intervalle de valeurs désigné par l'expression « entre a et b » représente le domaine de valeurs allant de plus de « a » à moins de « b » (c'est-à-dire bornes « a » et « b » exclues) tandis que tout intervalle de valeurs désigné par l'expression « de a à b » signifie le domaine de valeurs allant de « a » jusqu'à « b » (c'est-à-dire incluant les bornes strictes « a » et « b »).

Un premier objet de la présente invention est donc une composition solide, utilisable notamment comme revêtement de protection adhésif au métal, hydrophobe (en d'autres termes, anticorrosion) et électriquement conducteur, comportant au moins :
- à titre de charge conductrice, de 75% à 95% de microparticules électriquement conductrices dont la taille moyenne en masse est comprise entre 1 µm et 100 µm ;
- à titre de matrice polymérique adhésive au métal et hydrophobe, de 5% à 25% d'une matrice polymère notée « P » comportant au moins 2 polymères différents :
   a) P1: un (au moins un) polymère fluoré thermoplastique dont la masse moléculaire moyenne en masse notée « Mw » est comprise entre 100 000 et 1 000 000 g/mol ;
   b) P2 : une (au moins une) résine thermodurcie dont la température de transition vitreuse est comprise entre 30°C et 150°C.

Une première caractéristique essentielle de cette composition de l'invention est donc de comporter, à titre de charge conductrice, de 75% à 95%, de préférence de 80% à 95%, de microparticules électriquement conductrices dont la taille moyenne en masse est comprise entre 1 µm et 100 µm. Cette taille moyenne en masse est préférentiellement comprise entre 1 et 50 µm, plus préférentiellement entre 2 et 25 µm.

Par « taille », on entend ici le diamètre dans le cas de particules sphériques, par exemple sous forme de poudre, ou la longueur (ou plus grande dimension) dans le cas de particules anisométriques, par exemple sous forme de bâtonnets ou de plaquettes.

Pour l'analyse de la granulométrie et le calcul de la taille moyenne des microparticules (ou diamètre moyen pour des microparticules supposées sensiblement sphériques), différentes méthodes connues sont applicables, par exemple par diffraction laser (par exemple selon la norme ISO-8130-13).

On peut aussi utiliser de manière simple, et préférentielle, une analyse de la granulométrie par un tamisage mécanique ; l'opération consiste à tamiser une quantité définie d'échantillon (par exemple 200 g) sur une table vibrante pendant 30 min avec des diamètres de tamis différents (par exemple, selon une raison de progression égale à 1,26, avec des mailles de 500, 400, ..., 100, 80, 63 µm, etc.) ; les refus récoltés sur chaque tamis sont pesés sur une balance de précision ; on en déduit le % de refus pour chaque diamètre de maille par rapport au poids total de produit ; la taille médiane (ou diamètre médian) est finalement calculée de manière connue à partir de l'histogramme de la distribution granulométrique.

Ces microparticules peuvent être organiques, inorganiques par exemple métalliques. A titre d'exemples de telles microparticules métalliques, peuvent être citées les particules de nickel, ou encore de nitrures de métaux tels que nickel, aluminium ou titane.

De préférence, ces microparticules comportent, c'est-à-dire sont constituées au moins en partie (i.e., partiellement ou dans leur totalité) par, des microparticules de graphite. Ces dernières peuvent se présenter sous forme de poudre et/ou sous forme lamellaire, par exemple sous forme de graphite exfolié de préférence de taille moyenne en masse comprise entre 2 et 15 µm et d'épaisseur comprise entre 50 et 150 nm (nanomètre).

Une autre caractéristique essentielle de la composition de l'invention est de comporter, à titre de matrice polymérique adhésive au métal et hydrophobe, de 5% à 25%, de préférence de 5% à 20%, d'une matrice polymère notée « P » comportant au moins 2 polymères différents :
- P1 : pour la fonction hydrophobe (anti-corrosion), un (au moins un, c'est-à-dire un ou plusieurs) polymère fluoré thermoplastique dont la masse moléculaire moyenne en masse « Mw » est comprise entre 100 000 et 1 000 000 g/mol ;
- P2 : pour la fonction adhésive, une (au moins une, c'est-à-dire une ou plusieurs) résine thermodurcie dont la température de transition vitreuse (Tg) est comprise entre 30°C et 150°C.

La masse moléculaire Mw de P1 est de préférence comprise dans un domaine de 200 000 à 800 000 g/mol.

Selon un autre mode de réalisation préférentiel, le polymère P1 comporte au moins, c'est-à-dire est constitué au moins en partie (i.e., partiellement ou en totalité) par, un homopolymère ou un copolymère de fluorure de vinylidène (en abrégé « PVDF »). Ce type de polymère est bien connu, disponible commercialement, généralement sous forme de poudre ou de pastilles, par exemple auprès de la société Solvay sous la dénomination commerciale « Solef ». C'est notamment un liant habituel connu pour des plaques bipolaires non pas en métal, mais en graphite.

De préférence, le polymère fluoré thermoplastique P1 présente une température de transition vitreuse (Tg) inférieure à 50°C, plus préférentiellement inférieure à 0°C. Selon un autre mode de réalisation préférentiel, combiné ou non au précédent, il présente une température de fusion (Tf) inférieure à 250°C, plus préférentiellement inférieure à 200°C.

De manière générale, par « résine » ou « résine thermodurcie » P2, on entend dans la présente demande la (au moins une) résine en tant que telle et toute composition à base de cette résine (ou mélange de résines) et comportant au moins un (c'est-à-dire un ou plusieurs) additif. Cette résine, dans la composition ou revêtement solide de l'invention, est bien entendu réticulée (thermodurcie), en d'autres termes sous la forme d'un réseau de liaisons tridimensionnelles, dans un état propre aux polymères dits thermodurcissables (par opposition aux polymères dits thermoplastiques).

De préférence, la température de transition vitreuse (Tg) de la résine thermodurcie P2 est comprise entre 80°C et 150°C, plus préférentiellement entre 90°C et 130°C.

La résine thermodurcissable (produit de départ) utilisée est généralement liquide à 20°C ; elle est utilisée préférentiellement avec un solvant, en particulier le styrène, afin d'ajuster sa viscosité selon les conditions particulières de mise en œuvre de l'invention.

Le terme « liquide » dans la présente demande qualifie toute substance qui, à température ambiante (20°C) et sous pression atmosphérique, est dans l'état liquide c'est-à-dire a la capacité de prendre à terme, disons pour fixer les idées en moins d'une heure, la forme de son contenant ; par opposition, toute substance ne remplissant pas ce critère est considérée comme « solide » (à 20°C).

Il s'agit par définition d'une résine réticulable (i.e., durcissable) susceptible d'être réticulée, durcie par toute méthode connue, par exemple par rayonnement ou par traitement thermique, généralement en présence d'un système initiateur de polymérisation tel qu'un photo-initiateur ou un thermo-initiateur. On utilise de préférence un initiateur du type thermique, plus préférentiellement un peroxyde organique tel qu'un peroxyester, à titre d'exemple un méthyle éthyle cétone peroxyde (MEKP), un cumène hydroperoxyde (CHP) ou encore un mélange des deux à différents ratios, initiateur auquel peuvent être associés un accélérateur de réticulation, par exemple du type aniline (e.g. diméthyl-aniline ou DMA), ou un promoteur de réticulation par exemple un composé de cobalt (e.g. naphthénate de cobalt).

De préférence, la résine P2 comporte, c'est-à-dire est constituée au moins en partie (i.e., en tout ou partie) par, une résine vinylester, en particulier du type époxyvinylester. On utilise plus particulièrement une résine époxyvinylester qui au moins pour partie est à base (c'est-à-dire greffée sur une structure du type) novolaque (encore appelée phénoplaste) et/ou bisphénolique, en d'autres termes préférentiellement une résine vinylester à base novolaque, bisphénolique, ou novolaque et bisphénolique, plus préférentiellement encore une résine vinylester du type bisphénol-époxy.

Une résine époxyvinylester à base novolaque (partie entre crochets dans la formule I ci-dessous) répond par exemple, de manière connue, à la formule (I) qui suit :

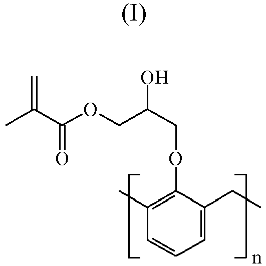

Une résine époxyvinylester à base bisphénolique A (partie entre crochets de la formule (II) ci-dessous) répond par exemple à la formule (le "A" rappelant que le produit est fabriqué à l'aide d'acétone):

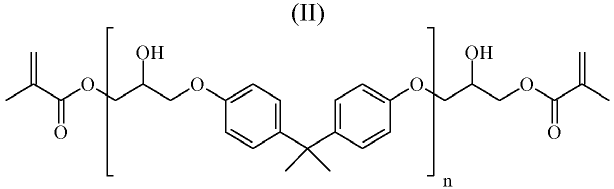

Une résine époxyvinylester de type bisphénolique a montré d'excellents résultats ; à titre d'exemples d'une telle résine, on peut citer notamment les résines de série « DION 9100 » commercialisées par la société Reichhold (contenant environ 45% de styrène), pour diverses applications, en particulier pour la fabrication de composites stratifiés à base de fibres de verre.

Grâce à son domaine de Tg spécifique, la résine P2 est capable de conférer au revêtement non seulement souplesse et flexibilité, mais aussi des propriétés auto-obturantes (« *self-sealing* ») grâce à une haute déformabilité, ce qui constitue un avantage notable pour les applications anti-corrosion, en particulier pour une application de peinture de plaque bipolaire pour pile à combustible. Elle limite également la perméabilité de ce revêtement ou de cette peinture à haute température.

Les températures de fusion (Tf) et de transition vitreuse (Tg) indiquées précédemment sont mesurées de manière connue par DSC (*Differential Scanning Calorimetry*)*,* au second passage, par exemple et sauf indications différentes spécifiées dans la présente demande, selon la norme ASTM D3418 de 1999 (appareil DSC "822-2" de Mettler Toledo ; atmosphère azote ; échantillons préalablement portés (10°C/min) de -80°C à la température maximale visée (par exemple 200°C), puis refroidis rapidement (en 10 min) jusqu'à -80°C, avant enregistrement final de la courbe de DSC de -80°C à la température maximale visée (par exemple 200°C), selon une rampe de 10°C/min.

La masse moléculaire moyenne en masse (Mw) est mesurée par SEC (*Size Exclusion Chromatography*)*.* Pour rappel, cette technique permet de séparer les macromolécules en solution suivant leur taille à travers des colonnes remplies d'un gel poreux. Les macromolécules sont séparées suivant leur volume hydrodynamique, les plus volumineuses étant éluées en premier.

La SEC est couplée à un réfractomètre, elle donne dans ce cas des informations relatives. À partir de produits étalons commerciaux, les différentes masses molaires moyennes en nombre (Mn) et en poids (Mw) qui caractérisent la distribution de masses molaires du polymère, peuvent être déterminées et l'indice de polymolécularité (Ip = Mw/Mn) calculé via un étalonnage dit de Moore. Il n'y a pas de traitement particulier de l'échantillon de polymère avant analyse. Celui-ci est simplement solubilisé dans le solvant d'élution à une concentration d'environ 1 g/L. La solution est ensuite filtrée sur un filtre de porosité 0,45 µm avant injection. L'appareillage utilisé est une chaîne chromatographique "WATERS alliance". Le solvant d'élution est le DMAC (diméthyle-acétamide), le débit de 0,7 ml/min, la température du système de 50°C et la durée d'analyse de 90 min. On utilise un jeu de quatre colonnes WATERS (1 colonne Styragel HMW7 + 1 colonne Styragel HMW6E + 2 colonnes Styragel HT6E). Le volume injecté de la solution d'échantillon de polymère est 100 µL. Le détecteur est un réfractomètre différentiel "WATERS 2414" et le logiciel d'exploitation des données chromatographiques est le système "WATERS EMPOWER". Les masses molaires moyennes calculées sont relatives à une courbe d'étalonnage réalisée à partir de polystyrènes étalons commerciaux « PSS READY CAL-KIT ».

Dans la composition de l'invention, le rapport pondéral P2/P1 est de préférence compris entre 0,2 et 5, plus préférentiellement entre 0,4 et 2,5.

Le taux (% en masse) de polymère P1, dans la composition, est de préférence compris entre 1% et 15%, plus préférentiellement entre 2 et 10% ; le taux de résine P2 est quant à lui préférentiellement compris entre 2% et 15%, plus préférentiellement entre 5 et 12%.

La composition solide de l'invention précédemment décrite peut comporter, de manière optionnelle, divers additifs connus notamment pour entrer dans la formulation de revêtements ou peintures pour plaques bipolaires de piles à combustible, par exemple des promoteurs d'adhésion, des agents anticorrosion.

La composition solide de l'invention précédemment décrite est utilisable sur tout type de substrat dont au moins la surface est (au moins en partie) métallique, à titre de revêtement de protection adhésif au métal, hydrophobe (en d'autres termes à propriété anticorrosion) et électriquement conducteur.

Pour déposer la composition solide de l'invention sur un tel substrat, on utilise préférentiellement un procédé comportant les étapes suivantes :
- dans un premier récipient, dissoudre le polymère P1 dans un solvant organique de ce polymère ;
- dans un deuxième récipient, disperser (c'est-à-dire mettre en suspension) les microparticules électriquement conductrices dans ce solvant du polymère P1 ;
- ajouter, dans le premier récipient, la résine (ou composition de résine) P2 à l'état liquide ;
- mélanger le contenu des premier et deuxième récipients puis déposer le mélange (suspension) ainsi obtenu sur le substrat ;
- réticuler la résine et éliminer tout solvant, pour obtention du revêtement final visé à l'état solide.

Le solvant organique du polymère fluoré P1 est choisi de préférence dans le groupe constitué par tétrahydrofurane (THF), méthyl-éthyl-cétone (MEK), diméthyl-formamide (DMF), diméthyl-acétamide (DMA), diméthyl-sulfoxide (DMSO), tétraméthyl-urée (TMU), N-méthyl-2-pyrrolidone (NMP), N-éthyle-2-pyrrolidone (NEP), triméthyl-phosphate et les mélanges de tels solvants ; plus préférentiellement, ce solvant est la NMP.

Dans le premier récipient, la résine (ou composition de résine) P2 est ajoutée à l'état liquide, telle que ou de préférence dans un solvant approprié, plus préférentiellement dans du styrène ; le solvant permet avantageusement, selon les modes de réalisation particuliers de l'invention, d'ajuster la viscosité de la résine, et donc celle de la peinture finale à l'état de suspension pour une application optimale de cette dernière.

Le dépôt du mélange liquide sur le substrat métallique pourra être conduit selon différentes méthodes générales bien connues de l'homme du métier, par exemple par application à l'aide d'un pinceau, par immersion dans un bain, ou encore par pulvérisation.

La réticulation de la résine P2 et donc solidification de la composition de l'invention, peut être conduite par toute méthode appropriée. Elle est conduite de préférence par chauffage, typiquement à une température supérieure à 100°C, ce qui permet d'éliminer le ou les solvant(s) utilisé(s) en même temps que se produit la réticulation. Cette dernière est opérée de préférence en présence d'un système thermo-initiateur de polymérisation, par exemple un composé peroxyde.

La composition de l'invention est tout particulièrement utilisable comme peinture de plaque bipolaire pour pile à combustible, cette plaque étant par exemple en acier, plus préférentiellement en acier inox revêtu optionnellement d'une fine couche métallique (donc couche intermédiaire) en un autre métal tel que par exemple du nickel, comme cela est expliqué plus en détail dans les exemples de réalisation qui suivent.

L'épaisseur du revêtement de composition solide selon l'invention, sur une telle plaque bipolaire, est de préférence comprise entre 10 et 60 µm, plus préférentiellement entre 15 et 50 µm.

Lorsque l'acier inox est préalablement recouvert d'une couche intermédiaire d'un autre métal, par exemple du nickel, cette couche intermédiaire a une épaisseur comprise de préférence entre 2 et 20 µm, plus préférentiellement dans un domaine de 5 à 15 µm.

### 5. EXEMPLES DE REALISATION DE L'INVENTION

Dans les exemples qui suivent, on utilise une composition solide selon l'invention comme peinture (revêtement) d'une plaque bipolaire pour pile à combustible PEM.

Une plaque en acier inox (316 L, dimensions 25x25 cm) a été préalablement revêtue d'une fine couche intermédiaire de nickel, de manière connue par voie électrolytique, d'épaisseur égale à environ 10 µm.Puis la peinture a été déposée selon le procédé précédemment décrit, en appliquant successivement les étapes détaillées qui suivent.

### a) Préparation d'une solution de PVDF (à 5% dans NMP)

Dans un premier récipient (bouteille en verre teinté marron, de 100 ml, équipée d'un couvercle) ont été ajoutés 10 g de PVDF sous forme de poudre ("Solef 5320" de la société Solvay, Mw égal à environ 530 000 ; Tg égale à environ -40°C ; Tf égale à environ 160°C), puis 200 ml de NMP anhydre (qualité « Biotech », Sigma-Aldrich). Le tout a été agité (agitateur magnétique, durant toute une nuit) jusqu'à ce que le PVDF soit totalement dissous.

### b) Préparation d'une suspension des microparticules conductrices (mélange conducteur)

Dans un deuxième récipient (bouteille en verre de 250 ml équipée d'un couvercle), 12,5 g de graphite en poudre (« M850 » de la société Asbury Carbons) de taille moyenne égale à environ 5 µm et 6,25 g de graphite expansé sous forme lamellaire (« MX15 », société Timcal, Suisse) de taille moyenne égale à environ 17 µm, ont été dispersés dans 50 ml de NMP, le tout agité pendant toute une nuit. Puis, à cette suspension de graphite, ont été ajoutés 6,25 g de particules de nickel (taille moyenne 3 µm; produit Sigma-Aldrich N° 266981, pureté 99,7%), pour obtention d'une composition ayant l'apparence d'une pâte semi-solide, le tout agité (sans barreau magnétique) pendant 5 min avant introduction du mélange de polymères préparé à l'étape c) qui suit.

### c) Préparation de la solution liquide PVDF/vinylester (mélange polymère)

Puis, dans le premier récipient de 100 ml, à 60,2 g de solution à 5% de PVDF préparée à l'étape a) ont été ajoutés 2,1 g de résine vinylester (« Dion 9100 » de Reichhold, Allemagne, à 45% de styrène ; Tg égale à environ 105°C), le tout agité (barreau magnétique) pendant 5 min. Enfin, 0,2 ml de thermo-initiateur CHP avec promoteur cobalt (« Trigonox 239 » de Akzo Nobel, solution à 45%) a été ajouté et la solution résultante (mélange polymère) agitée pendant 2 min.

### d) Addition du mélange polymère au mélange conducteur

Enfin, la solution de polymère préparée à l'étape c) ci-dessus a été versée avec précaution (rinçage final du premier récipient avec 15 ml de solvant NMP) dans le deuxième récipient contenant la suspension des microparticules. Le deuxième récipient a été refermé et agité 5 min (sans barreau magnétique). A ce stade, le mélange final ou peinture à l'état de suspension avait la composition suivante (% en masse) : 12,5 g de « M850 » (41.51%), 6,25 g de « MX15 » (20,76%), 6,25 g de Ni (20.76%), 2,1 g de « Dion 9100 » (6.98%) and 3,01 g de PVDF « Solef 5320 » (10 %), le tout donnant 30,11 g (100 %) de solide.

### e) Dépôt de la peinture sur plaque bipolaire

Des échantillons de la peinture ainsi préparée ont été pulvérisés sur des plaques bipolaires à l'aide d'un pistolet de pulvérisation pneumatique (« Air Gupsa AZ3 HTE2 » de la société Anest Iwate Group ; Italie) en utilisant de l'azote comprimé (2,5 bar) comme gaz porteur. Les plaques étaient disposées verticalement dans un four préchauffé à 120°C, puis elles ont été traitées thermiquement à cette température pendant 60 min. Une fois le traitement terminé et les plaques refroidies à température ambiante (20°C), l'épaisseur moyenne (sur 5 mesures) de la peinture ainsi déposée à l'état solide (débarrassée de tout solvant) était d'environ 30 µm.

### f) Mesures de conductivité électrique (tests ICR)

Chaque échantillon de plaque bipolaire testé, ainsi revêtu, a été disposé « en sandwich » entre deux couches GDL (« TGP-H-60 » de la société Torray) pour pile à combustible, elles-mêmes disposées entre deux électrodes de cuivre revêtues d'or (chacune de surface de contact utile de 10 cm²) alimentées par un appareil de mesure (micro-ohmmètre AOIP type « OM 15 ») injectant un courant de 1 A dans le circuit, entre les deux électrodes.

On a caractérisé la conductivité électrique en calculant la résistance dite de contact d'interface ou « ICR » (en mΩ.cm²) entre plaque et GDL en fonction de la pression de contact (50 à 200 N/cm²) exercée sur l'ensemble du dispositif plaque / GDL / électrodes lors de la mesure. Une telle méthode est bien connue, elle a été décrite dans de nombreuses publications, par exemple dans « Effect of manufacturing processes on contact resistance characteristics of metallic bipolar plates in PEM fuel cells », International Journal of Hydrogen Energy 36 (2011), 12370-12380 (voir notamment paragraphe 2.3), ou encore dans la demande de brevet WO 02/13300 (voir notamment Fig. 1 et 2).

Les résultats obtenus (voir tableau ci-dessous) sont excellents pour l'homme du métier : ils se sont révélés immédiatement, sans optimisation particulière, aussi bons que ceux obtenus sur une peinture commerciale (peinture Acheson de Henkel, données entre parenthèses) pour les mêmes conditions opératoires.

**Tableau**

| ICR (mΩ.cm²) / Pression de contact (N/cm²) | | | |
|---|---|---|---|
| 50 N/cm² | 100 N/cm² | 150 N/cm² | 200 N/cm² |
| 22.8 | 16.3 | 13.6 | 11.5 |
| *(20.8)* | *(15.6)* | *(14.6)* | *(13.5)* |

Des essais comparatifs ont été conduits sans résine P2 c'est-à-dire dans lesquels une même quantité de polymère P1 (PVDF) a été ajoutée pour remplacer la résine P2 (vinylester) manquante ; en d'autres termes, le polymère P1 constituait la totalité (100%) de la matrice polymère P (rapport pondéral P2/P1 égal à zéro).

Si la conductivité électrique s'est révélée sensiblement équivalente, on a constaté par contre, après un fonctionnement de 100 heures dans une pile à combustible PEM, que le revêtement de la plaque s'était dégradé avec un détachement partiel en surface, bien visible à l'œil nu, de microparticules conductrices, ce qui n'était pas le cas en présence de la résine P2.

En conclusion, l'invention permet l'obtention d'un revêtement à conductivité électrique élevée, au moins aussi bonne que celle de solutions antérieures connues, ayant des propriétés d'adhésion au métal élevées et une forte hydrophobicité, gage de très bonnes propriétés anti-corrosion, ce revêtement présentant en outre souplesse et flexibilité, ainsi que des propriétés auto-obturantes avantageuses, qui lui confèrent une endurance améliorée.

## Revendications

1. Composition solide utilisable notamment comme revêtement adhésif au métal, hydrophobe et électriquement conducteur, comportant au moins (% en poids de composition) :
- à titre de charge conductrice, de 75% à 95% de microparticules électriquement conductrices dont la taille moyenne en poids est comprise entre 1 µm et 100 µm ;
- à titre de matrice polymérique adhésive au métal et hydrophobe, de 5% à 25% d'une matrice polymère notée « P » comportant au moins 2 polymères différents :
a) P1: un polymère fluoré thermoplastique dont la masse moléculaire moyenne en poids notée « Mw » et mesurée par SEC (Size Exclusion Chromatography) selon le procédé rédige dans la description, est comprise entre 100 000 et 1 000 000 g/mol ;
b) P2 : une résine thermodurcie dont la température de transition vitreuse P mesurée par DSC (Differential Scanning Calorimetry) selon la norme ASTM D3418 en suivant la méthode rédigée dans la description est comprise entre 30°C et 150°C.

2. Composition selon la revendication 1, dans laquelle le taux de microparticules est compris dans un domaine de 80% à 95%.

3. Composition selon l'une quelconque des revendications 1 ou 2, dans laquelle la taille moyenne en masse des microparticules mesurée par analyse de la granulométrie par tamisage mécanique est comprise entre 1 et 50 µm, de préférence entre 2 et 25 µm.

4. Composition selon l'une quelconque des revendications 1 à 3, dans laquelle les microparticules comportent des microparticules de graphite.

5. Composition selon l'une quelconque des revendications 2 à 4, dans laquelle le taux de matrice polymère P est compris dans un domaine de 5 à 20%.

6. Composition selon l'une quelconque des revendications 1 à 5, dans laquelle la masse moléculaire Mw est comprise dans un domaine de 200 000 à 800 000 g/mol.

7. Composition selon l'une quelconque des revendications 1 à 6, dans laquelle le polymère P1 comporte un homopolymère ou un copolymère de fluorure de vinylidène.

8. Composition selon l'une quelconque des revendications 1 à 7, dans laquelle le polymère P1 présente une température de transition vitreuse inférieure à 50°C, de préférence inférieure à 0°C, et une température de fusion inférieure à 250°C, de préférence inférieure à 200°C, les températures de transition vitreuse et de fusion étant mesurées par DSC (Differential Scanning Calorimetry) selon la norme ASTM D3418 en suivant la méthode rédigée dans la description.

9. Composition selon l'une quelconque des revendications 1 à 8, dans laquelle la température de transition vitreuse de la résine thermodurcie P2 est comprise entre 80°C et 150°C, de préférence entre 90°C et 130°C.

10. Composition selon l'une quelconque des revendications 1 à 9, dans laquelle P2 comporte une résine vinylester, de préférence du type bisphénol-époxy.

11. Composition selon l'une quelconque des revendications 1 à 10, dans laquelle le rapport pondéral P2/P1 est compris entre 0,2 et 5, de préférence entre 0,4 et 2,5.

12. Composition selon l'une quelconque des revendications 1 à 11, dans laquelle le taux de polymère P1 dans la composition solide est compris entre 1% et 15%, de préférence entre 2 et 10%, et le taux de résine P2 dans la composition solide est compris entre 2% et 15%, de préférence entre 5 et 12%.

13. Utilisation comme revêtement adhésif au métal, hydrophobe et électriquement conducteur, sur un substrat dont au moins la surface est au moins en partie métallique, d'une composition selon l'une quelconque des revendications 1 à 12.

14. Substrat dont au moins la surface est au moins en partie métallique, au moins ladite partie métallique étant revêtue d'une composition solide selon l'une quelconque des revendications 1 à 12.

15. Plaque bipolaire en acier, pour pile à combustible, revêtue d'une composition solide selon l'une quelconque des revendications 1 à 12.

## Patentansprüche

1. Feststoffliche Zusammensetzung, die insbesondere als an Metall anhaftende Beschichtung verwendet werden kann, wobei sie hydrophob und elektrisch leitend ist und mindestens Folgendes aufweist (Gewichts-% der Zusammensetzung):
- als leitfähigen Füllstoff 75 % bis 95 % an elektrisch leitfähigen Mikropartikeln, deren gewichtsbezogene mittlere Größe zwischen 1 µm und 100 µm liegt;
- als polymerartige Matrix, die am Metall anhaftet und hydrophob ist, 5 % bis 25 % einer Polymermatrix, die als "P" bezeichnet wird, wobei sie mindestens 2 verschiedenartige Polymere aufweist:
a) P1: ein thermoplastisches Fluorpolymer, dessen Gewichtsmittel der Molekülmasse, welches als "Mw" bezeichnet und mittels SEC (Size Exclusion Chromatography) gemäß dem Verfahren gemessen wird, das in der Beschreibung dargelegt ist, zwischen 100.000 und 1.000.000 g/mol liegt;
b) P2: ein mittels Wärmeeinwirkung gehärtetes Harz, dessen Glasübergangstemperatur, welche mittels DSC (Differential Scanning Calorimetry) gemäß der Norm ASTM D3418 und entsprechend der Methode gemessen wird, die in der Beschreibung dargelegt ist, zwischen 30 °C und 150 °C liegt.

2. Zusammensetzung nach Anspruch 1, wobei der Gehalt an Mikropartikeln im Bereich von 80 % bis 95 % liegt.

3. Zusammensetzung nach einem beliebigen der Ansprüche 1 oder 2, wobei die massenbezogene mittlere Größe der Mikropartikel, welche mittels Analyse der Korngrößenverteilung durch mechanisches Sieben bestimmt wird, zwischen 1 und 50 µm, vorzugsweise zwischen 2 und 25 µm liegt.

4. Zusammensetzung gemäß einem beliebigen der Ansprüche 1 bis 3, wobei die Mikropartikel Graphitmikropartikel aufweisen.

5. Zusammensetzung nach einem beliebigen der Ansprüche 2 bis 4, wobei der Gehalt an Polymermatrix P im Bereich von 5 bis 20 % liegt.

6. Zusammensetzung nach einem beliebigen der Ansprüche 1 bis 5, wobei die Molekülmasse Mw im Bereich von 200.000 bis 800.000 g/mol liegt.

7. Zusammensetzung nach einem beliebigen der Ansprüche 1 bis 6, wobei das Polymer P1 ein Vinylidenfluorid-Homopolymer oder -Copolymer aufweist.

8. Zusammensetzung nach einem beliebigen der Ansprüche 1 bis 7, wobei das Polymer P1 eine Glasübergangstemperatur von weniger als 50 °C, vorzugsweise von weniger als 0 °C, und eine Schmelztemperatur von weniger als 250 °C, vorzugsweise von weniger als 200 ° C aufweist, wobei die Glasübergangs- und die Schmelztemperaturen mittels DSC (Differential Scanning Calorimetry) gemäß der Norm ASTM D3418 entsprechend der Methode gemessen werden, welche in der Beschreibung dargelegt ist.

9. Zusammensetzung nach einem beliebigen der Ansprüche 1 bis 8, wobei die Glasübergangstemperatur des durch Wärmeeinwirkung gehärteten Harzes P2 zwischen 80 °C und 150 °C, vorzugsweise zwischen 90 °C und 130 °C liegt.

10. Zusammensetzung nach einem beliebigen der Ansprüche 1 bis 9, wobei P2 ein Vinylesterharz aufweist, das vorzugsweise vom Typ Bisphenol-Epoxy ist.

11. Zusammensetzung nach einem beliebigen der Ansprüche 1 bis 10, wobei das Gewichtsverhältnis P2/P1 zwischen 0,2 und 5, vorzugsweise zwischen 0,4 und 2,5 liegt.

12. Zusammensetzung nach einem beliebigen der Ansprüche 1 bis 11, wobei der Gehalt an Polymer P1 in der feststofflichen Zusammensetzung zwischen 1 % und 15 %, vorzugsweise zwischen 2 und 10 % liegt, und der Gehalt an Harz P2 in der feststofflichen Zusammensetzung zwischen 2 % und 15 %, vorzugsweise zwischen 5 und 12 % liegt.

13. Verwendung einer Zusammensetzung nach einem beliebigen der Ansprüche 1 bis 12 als an Metall anhaftende Beschichtung, die hydrophob und elektrisch leitfähig ist, auf einem Substrat, das mindestens eine Fläche hat, welche zumindest abschnittsweise metallisch ist.

14. Substrat, das mindestens eine Fläche hat, welche zumindest abschnittsweise metallisch ist, wobei zumindest der metallische Abschnitt mit einer feststofflichen Zusammensetzung nach einem beliebigen der Ansprüche 1 bis 12 beschichtet ist.

15. Bipolarplatte aus Stahl, die für Brennstoffzellen bestimmt ist, wobei sie mit einer feststofflichen Zusammensetzung nach einem beliebigen der Ansprüche 1 bis 12 beschichtet ist.

## Claims

1. Solid composition of use in particular as hydrophobic, electrically conductive, metal-adhesive coating, comprising at least (% by weight of composition):
- as conductive filler, from 75% to 95% of electrically conductive microparticles, the weight-average size of which is between 1 µm and 100 µm;
- as hydrophobic, metal-adhesive polymer matrix, from 5% to 25% of a polymer matrix denoted "P", comprising at least 2 different polymers:
a) P1: a thermoplastic fluoropolymer, the weight-average molecular weight of which, denoted "Mw" and measured by SEC ((Size Exclusion Chromatography) according to the method written in the description, is between 100 000 and 1 000 000 g/mol;
b) P2: a thermoset resin, the glass transition temperature of which, measured by DSC (Differential Scanning Calorimetry) according to standard ASTM D3418 by following the method written in the description, is between 30°C and 150°C.

2. Composition according to Claim 1, wherein the content of microparticles is within a range from 80% to 95%.

3. Composition according to either one of Claims 1 and 2, wherein the weight-average size of the microparticles, measured by analysis of the particle size by mechanical sieving, is between 1 and 50 µm, preferably between 2 and 25 µm.

4. Composition according to any one of Claims 1 to 3, wherein the microparticles comprise graphite microparticles.

5. Composition according to any one of Claims 2 to 4, wherein the content of polymer matrix P is within a range from 5 to 20%.

6. Composition according to any one of Claims 1 to 5, wherein the molecular weight Mw is within a range from 200 000 to 800 000 g/mol.

7. Composition according to any one of Claims 1 to 6, wherein the polymer P1 comprises a homopolymer or a copolymer of vinylidene fluoride.

8. Composition according to any one of Claims 1 to 7, wherein the polymer P1 has a glass transition temperature of less than 50°C, preferably less than 0°C and a melting point of less than 250°C, preferably less than 200°C, the glass transition and melting temperatures being measured by DSC (Differential Scanning Calorimetry) according to standard ASTM D3418 by following the method written in the description.

9. Composition according to any one of Claims 1 to 8, wherein the glass transition temperature of the thermoset resin P2 is between 80°C and 150°C, preferably between 90°C and 130°C.

10. Composition according to any one of Claims 1 to 9, wherein P2 comprises a vinyl ester resin, preferably of bisphenol epoxy type.

11. Composition according to any one of Claims 1 to 10, wherein the P2/P1 weight ratio is between 0.2 and 5, preferably between 0.4 and 2.5.

12. Composition according to any one of Claims 1 to 11, wherein the content of polymer P1 in the solid composition is between 1% and 15%, preferably between 2 and 10%, and the content of resin P2 in the solid composition is between 2% and 15%, preferably between 5 and 12%.

13. Use, as hydrophobic, electrically conductive, metal-adhesive coating, on a substrate, at least the surface of which is at least partially metallic, of a composition according to any one of Claims 1 to 12.

14. Substrate, at least the surface of which is at least partially metallic, at least said metallic part being coated with a solid composition according to any one of Claims 1 to 12.

15. Steel bipolar plate for fuel cell, coated with a solid composition according to any one of Claims 1 to 12.
